# EUROPÄISCHE PATENTSCHRIFT

(11) **EP 0 794 105 B1**
(45) Veröffentlichungstag und Bekanntmachung des Hinweises auf die Patenterteilung: **29.09.1999**
(21) Anmeldenummer: 97102493.0
(22) Anmeldetag: 15.02.1997
(51) Int. Cl.: B62D 7/18, B60G 7/00, B60G 13/00

(54) **Schwenklagereinheit**
Unit comprising joints
Ensemble comportant des paliers

(30) Priorität: 07.03.1996 DE 19608788
(43) Veröffentlichungstag der Anmeldung: 10.09.1997
(73) Patentinhaber: Dr.Ing.h.c. F. Porsche Aktiengesellschaft, 70435 Stuttgart (DE)
(72) Erfinder: Schaible, Walter, 71282 Hemmingen (DE); Germano, Francesco, 74321 Bietigheim-Bissingen (DE)

(56) Entgegenhaltungen:
- EP-A- 0 108 041
- CH-A- 315 496
- DE-A- 4 313 624
- US-A- 2 173 973
- US-A- 3 749 415
- US-A- 4 491 340
- US-A- 4 761 019
- US-A- 5 145 204

## Beschreibung

Die Erfindung bezieht sich auf eine Schwenklagereinheit.

Aus der GB-PS 20 20 235 A ist eine Schwenklagereinheit bekannt, die aus geformten Schalenteilen besteht, welche miteinander über eine Schweißung verbunden sind. In diesen Schalenteilen ist ein Zentralzapfen gehalten und zur Aufnahme eines Federbeines sind Lagerungsbohrungen vorgesehen. Die Schalenteile sind ineinandergesteckt und weisen flächige Abstützungen im Randbereich auf, an dem auch eine Verbindungsschweißung liegt. Aus der US-A-3,749,415 ist ein Schwenklager bekannt, das ein Schalenteil mit Lagerungen für Lenkerarme einer Radaufhängung umfaßt. Mit dem Schalenteil ist ein plattenförmiges Steuerelement mit Lagerung für Abstützungen an einem Achsträger verbunden, in der die Radachse über eine Lagerung drehbar gehalten wird. Desweiteren ist aus der US-A-4,491,340 eine Schwenklagereinheit bekannt geworden, die einen aus einem Schalenteil bestehenden Träger aufweist, der mit einem Dämpferbein vorzugsweise durch eine Schweißung verbunden ist. An das Schalenteil ist durch Schrauben ein weiteres Schalenteil angesetzt, das so geformt ist, daß es sowohl einen Bremssattel aufnehmen kann wie auch gleichzeitig Führungseinrichtungen für die Bremsbeläge beinhaltet. Darüber hinaus ist das weitere Schalenteil mit einem Arm versehen, an dem eine Lenkstange angreifen kann, und besitzt eine Lagerung für einen Bolzen zur Aufnahme einer Bremsscheibe und eines Rades.

Aufgabe der Erfindung ist es, eine Schwenklagereinheit zu schaffen, die funktionssicher ein Dämpferbein sowie eine Bremseneinheit und Radlager sowie Lenkhebel aufnimmt und Lenker einer Radführungseinrichtung schwenkbar lagert. Desweiteren soll die Schwenklagereinheit einfach herzustellen und montierbar sein.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß die die Schwenklagereinheit bildenden zwei Schalenteile in einfacher Weise, beispielsweise durch Pressen in einem Formwerkzeug herstellbar und wobei alle Bohrungen und Ausnehmungen und dergleichen mit einbringbar sind. Die Schalenteile können aus Stahlblech, Leichtmetallblech oder aus Gußteilen bestehen.

Die Schalenteile sind in der Weise profiliert ausgeführt, daß einerseits den Festigkeitsanforderungen entsprochen wird und andererseits eine Lagerung des Dämpferbeines, eine Aufnahme von Führungsgelenken und eine Halterung des Bremssattels in vorteilhafter Weise einfachst ermöglicht wird. Ferner wird über einen durchgesteckten Zentralbolzen ein Lager gehalten, auf dem die Bremsscheibe mittels einer Radnabe angeordnet ist.

Die beiden Schalenteile ergänzen sich durch aufeinanderliegende Abstützflächen im Bereich der Lagerung des Bremssattels und der Aufnahme des Dämpferbeines und durch anschließende beabstandete Flächenbereiche im Bereich der Führungsgelenke und des Zentralbolzens. Hierdurch ergeben sich in vorteilhafter Weise in Bereichen relativ großer Belastungen hohe Widerstandsmomente, so daß auf das Rad einwirkende Seiten- und Bremskräfte optimal aufzunehmen sind, ohne daß eine Verbiegung oder Verformung der Schalenteile erfolgen kann.

Das außenliegende Schalenteil weist eine topfförmige Einprägung um den Zentralbolzen herum auf und die rundherum hochgezogenen Ränder sind teilweise abgestellt und mit einem abgewinkelten Bord versehen. Im oberen Rand ist eine halbkreisförmige Einformung vorgesehen, die korrespondierend zu einer randseitigen Einformung des innenliegenden Schalenteiles angeordnet ist und in der das Dämpferbein lagernd aufgenommen wird, wobei sich das untere freie Ende am Zentralbolzen über ein Lagerelement abstützt. Der an die Anformungen anschließende Bereich der beiden Schalenteile ist bis zum Aufnahmebereich des einen vorderen Führungsgelenks im Querschnitt annähernd Z-förmig ausgeführt.

Die Festlegung des Dämpferbeines an den Schalenteilen in den Einformungen erfolgt über eine Schelle, welche an den Schalenteilen über Schrauben festgesetzt wird.

Das innenliegende Schalenteil weist zur Lagerung des Bremssattels eine im Querschnitt etwa U-förmige Einprägung auf, die sich in das außenliegende Schalenteil passend einfügt, so daß eine steife und stabile Befestigung des Bremssattels an den beiden Schalenteilen ermöglich wird.

Die Aufnahmen für die Führungsgelenke in den beiden Schalenteilen sind unterhalb und oberhalb des Zentralbolzens vorgesehen, wobei ein drittes Führungsgelenk anstatt der Aufnahme für das Dämpferbein vorgesehen sein kann. Das Dämpferbein ist dann anderweitig an der Radaufhängung abgestützt.

Die Führungsgelenke zwischen den beiden Schalenteilen halten diese in einem Abstand zueinander. Die Führungsgelenke sind mit einem Aufnahmeelement versehen, das zur Aufnahme der Befestigungsschrauben an gegenüberliegenden Seitenkanten Nuten aufweist, die das Führungsgelenk in Lage hält.

Die Schwenklagereinheit, bestehend aus Dämpferbein, Bremse und Führungsgelenken und eine Radlagerung für eine Radaufhängung kann in einfacher Weise vormontiert werden. Dies bezieht sich auf die gesamte Einheit mit linker und rechter Schwenklagereinheit sowie einer Radaufhängung, so daß ein schneller und kostensparender Einbau ins Fahrzeug erfolgen kann.

Ein Ausführungsbeispiel der Erfindung ist in der Zeichnung dargestellt und wird im folgenden näher beschrieben.

Es zeigen
- Fig. 1: eine Draufsicht auf ein außenliegendes Schalenteil von innen her gesehen,
- Fig. 2: eine Draufsicht auf ein innenliegendes Schalenteil von innen her gesehen,
- Fig. 3: einen Querschnitt durch das innenliegende Schalenteil im Bereich von aufeinanderliegenden Flächenbereichen nach der Linie III-III der Fig. 2 in größerem Maßstab,
- Fig. 4: einen Querschnitt durch das innenliegende Schalenteil in einem Mittenbereich von aufeinanderliegenden Flächenbereichen nach der Linie IV-IV der Fig. 2 in größerem Maßstab,
- Fig. 5: einen Querschnitt durch das innenliegende Schalenteil im Bereich eines vornliegenden Führungsgelenks nach der Linie V-V der Fig. 2 in größerem Maßstab,

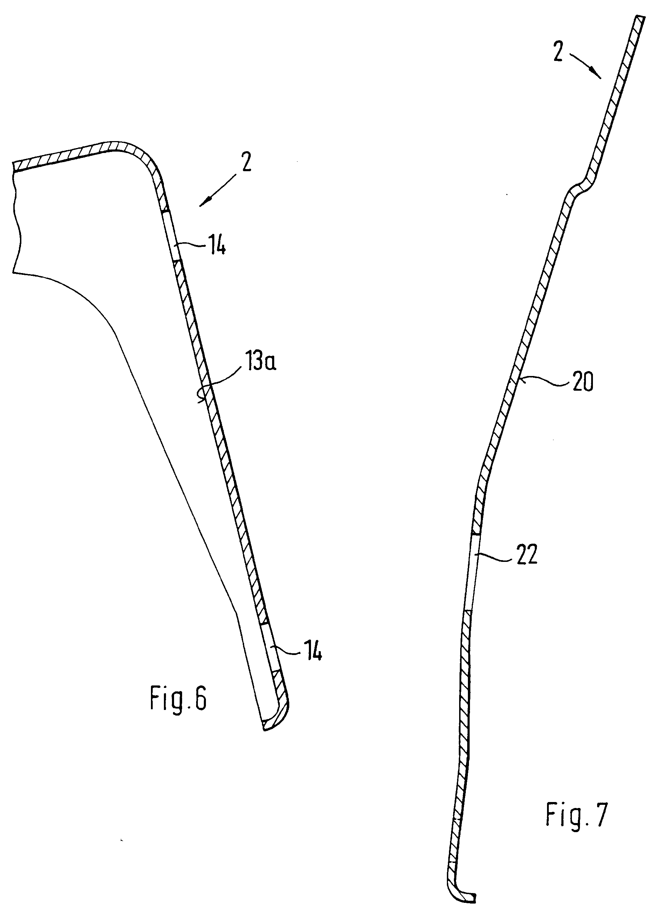

- Fig. 6: einen Längsschnitt durch das innenliegende Schalenteil im Bereich von aufeinanderliegenden Flächenbereichen nach der Linie VI-VI der Fig. 2 in größerem Maßstab,
- Fig. 7: einen Schnitt durch das innenliegende Schalenteil im Bereich der Aufnahme eines Dämpferbeines in größerem Maßstab,
- Fig. 8: einen Querschnitt durch das außenliegende Schalenteil im Bereich eines unteren Führungsgelenks nach der Linie VIII-VIII der Fig. 1 in größerem Maßstab,
- Fig. 9: einen Querschnitt durch das außenliegende Schalenteil im Bereich eines Zentralbolzens und von aufeinanderliegenden Flächenbereichen für den Bremssattel nach der Linie VIIII-VIIII der Fig. 1 in größerem Maßstab,
- Fig. 10: einen Querschnitt durch das außenliegende Schalenteil im Bereich von aufeinanderliegenden Flächenbereichen nach der Linie X-X der Fig. 1 in größerem Maßstab,

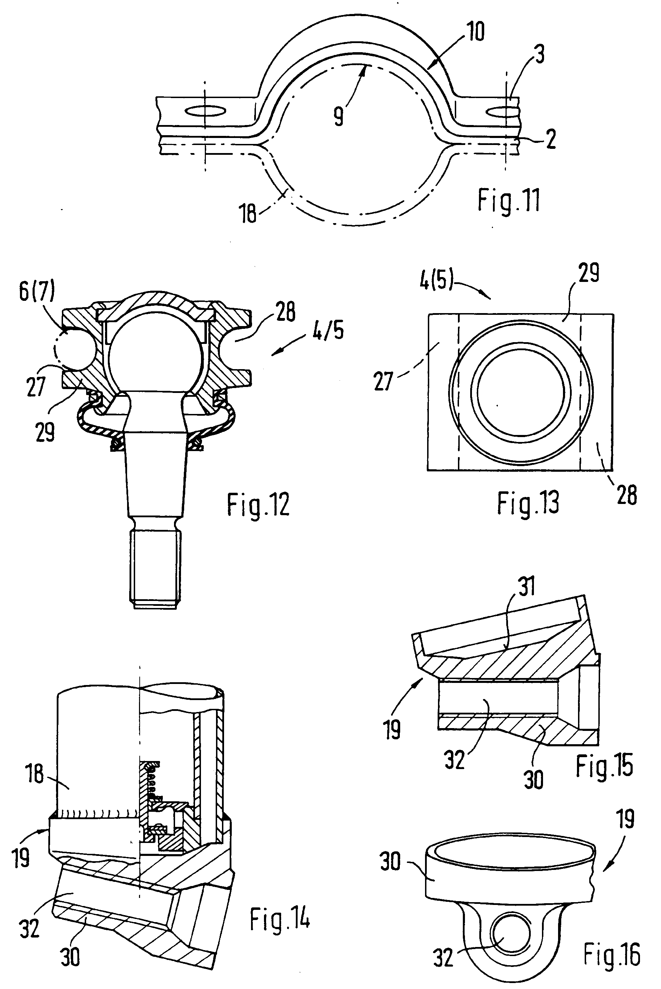

- Fig. 11: eine Ansicht auf eine obere Aufnahme für das Dämpferbein in Pfeilrichtung Z gesehen,
- Fig. 12: eine Schnittdarstellung des Führungsgelenks mit Aufnahmeelement,
- Fig. 13: eine Draufsicht auf das Aufnahmeelement,
- Fig. 14: eine Ansicht auf ein unteres Lagerelement am Dämpferbein zum Anschluß an den Zentralbolzen,
- Fig. 15: das Lagerelement im Schnitt,
- Fig. 16: eine Ansicht des Lagerelementes,
- Fig. 17: eine schaubildliche Darstellung der zusammengebauten Schalenteile mit Führungsgelenken und verbundenem Dämpferbein und
- Fig. 18: eine Darstellung der Schalenteile in einem zusammengebauten Zustand mit Führungsgelenken, Dämpferbein und Zentralbolzen.

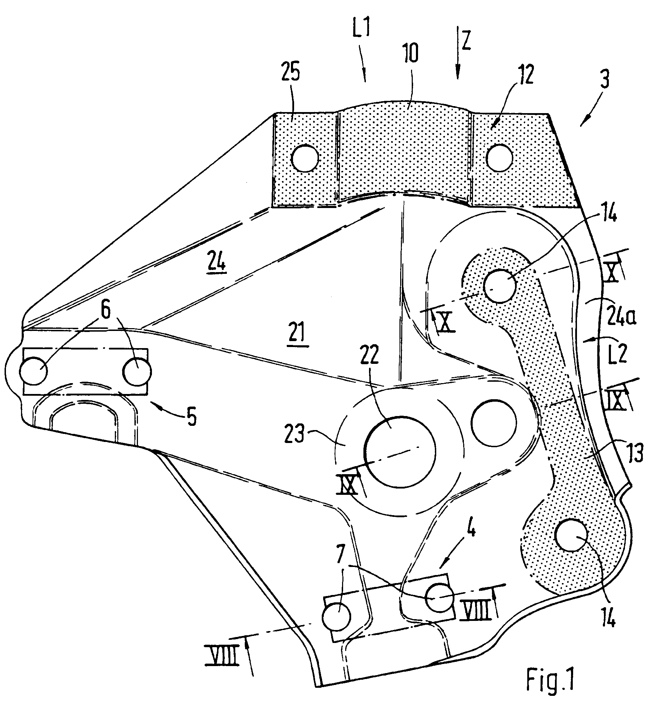

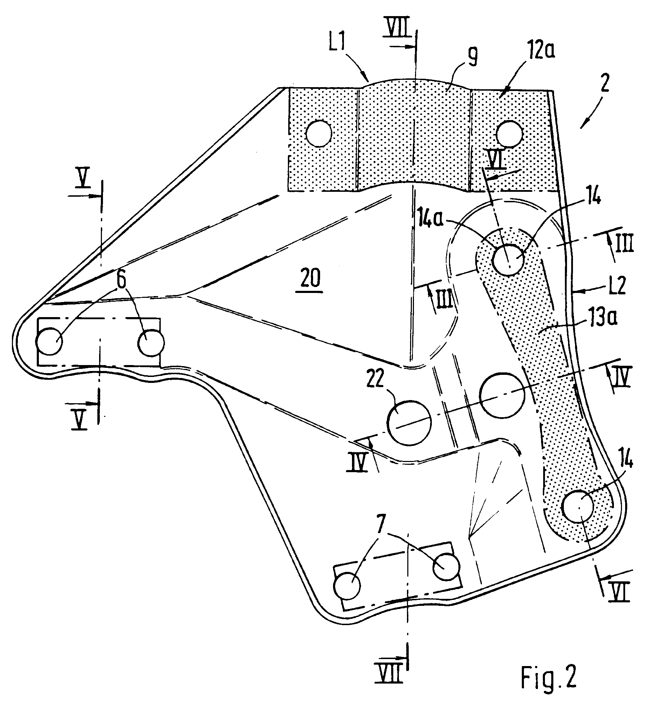

Die Schwenklagereinheit 1 umfaßt ein innenliegendes Schalenteil 2 (Fig. 2) und ein außenliegendes Schalenteil 3 (Fig. 1). Diese Schalenteile 2 und 3 sind unter Zwischenschaltung von Führungsgelenken 4, 5 über Befestigungsschrauben 6, 7 miteinander verbunden. Zur Lagerung eines Dämpferbeines 8 sind die Schalenteile 2, 3 mit geformten Aufnahmen 9, 10 und mit einem Zentralbolzen 11 versehen, der das untere freie Ende des Dämpferbeines abstützt.

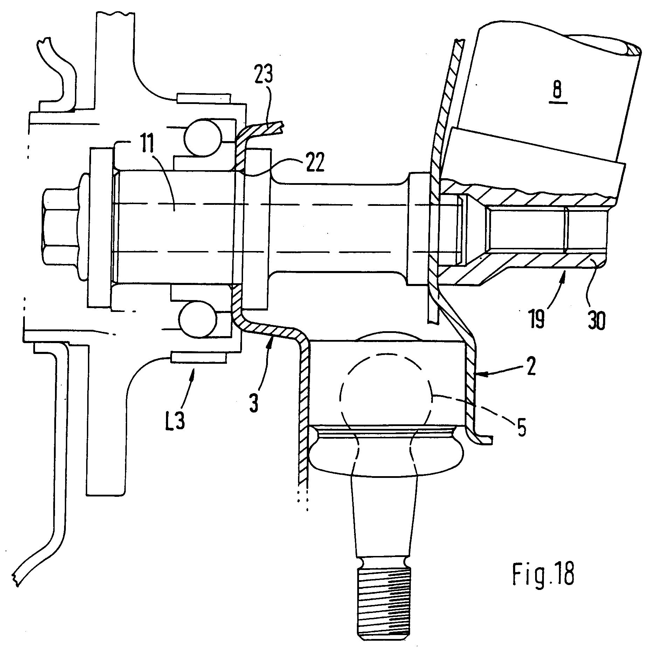

Die Schalenteile 2, 3 sind profiliert ausgeführt und weisen zur Radmitte hin Eindrückungen unterschiedlicher Tiefe auf. Im zusammengebauten Zustand (Fig. 18) sind die Schalenteile 2, 3 in Teilbereichen 12, 12a und 13, 13a flächig aufeinanderliegend und in anschließenden Teilbereichen 20, 21 sind die Schalenteile 2, 3 beabstandet zueinander angeordnet, so daß in diesen Bereichen ein Zwischenraum besteht.

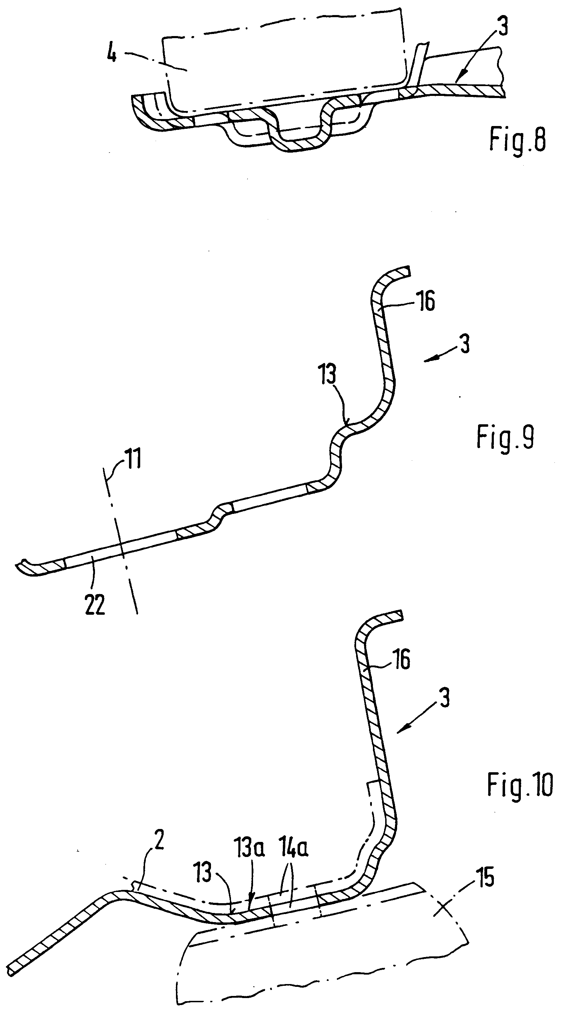

So bilden die Teilbereiche 13, 13a der beiden Schalenteile 2, 3 einen etwa sich vertikal erstreckenden Lagerungsabschnitt, der zur Befestigung eines Bremssattels 15 dient. Die Festlegung erfolgt über Befestigungsschrauben 14, die in Bohrungen 14a angeordnet sind. Wie in Fig. 10 näher dargestellt ist, weist der Flächenbereich 13 des Schalenteils 3 einen etwa U-förmigen Querschnitt auf, in den sich der entsprechende Flächenbereich 13a des innenliegenden Schalenteiles 2 einfügt und außenseitig dann der Bremssattel 15 befestigt wird. Anschließend an diesen Flächenbereich 13 ist das Schalenteil 3 mit einem Schenke 16 hochgeführt und der nachfolgend abgewinkelt ist. Zwischen den Schalenteilen 2, 3 in dem Bereich 13, 13a können auch Distanzstücke vorgesehen sein.

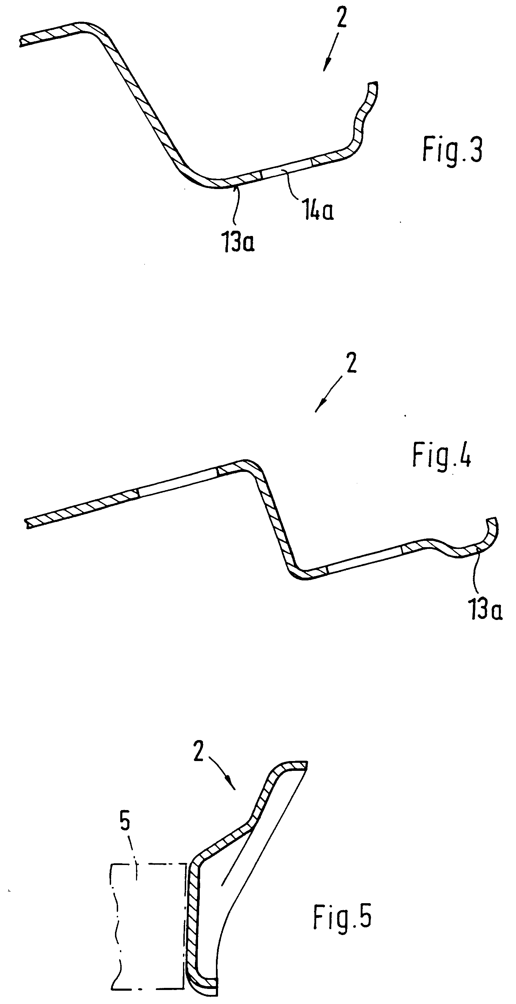

Wie in Fig. 3 näher dargestellt und in Fig. 10 mit strichtpunktierten Linien eingezeichnet, legt sich der Flächenbereich 13a des Schalenteils 2 in die Ausformung des Schalenteils 3 hinein und stützt sich im korrespondierenden Flächenbereich 13 ab. In Fig. 4 ist ein dem Schnitt nach Fig. 9 entsprechender Schnitt durch das Schalenteil 2 dargestellt, aus der die flächige Anlage zwischen den Schalenteilen 2,3 in den Flächenbereichen 13, 13a näher zu erkennen ist.

Ein weiterer sich gegenseitig abstützender etwa horizontaler Flächenbereich 12, 12a ist in den Einformungen 9, 10 des Schalenteils 2 vorgesehen. Zur Lagerung L1 des Dämpferbeines 8 liegen diese Einformungen ineinander und über eine Schelle 17 wird das Dämpferbein 8 lagegenau an den Schalenteilen 2, 3 befestigt. Das untere freie Ende 18 des Dämpferbeines 8 ist in einem Lagerelement 19 gehalten, das am Zentralbolzen 11 abgestützt ist.

Der an die korrespondierenden Einformungen 9, 10 der beiden Schalenteile 2, 3 anschließende Bereich bis zu einem oberen Führungsgelenk 5, sind die Schalenteile 2, 3 im Querschnitt etwa Z-förmig ausgeführt. Die Führungsgelenke 4, 5 unterhalb und oberhalb des Zentralbolzens 11 sind zwischen den Schalenteilen 2, 3 gehalten, wobei das eine obere Führungsgelenk 4 - in bezug auf die Fahrtrichtung - vor dem unteren Führungsgelenk 5 angeordnet ist.

An diese sich aufeinander abstützenden flächigen Teilbereiche 12, 12a und 13, 13a schließen sich die beabstandeten Bereiche 20, 21 der Schalenteile 2, 3 an. So weist das außenliegende Schalenteil 3 eine topfförmige Einprägung 23 um eine Aufnahmebohrung 22 für den Zentralbolzen 11 auf. Zum Außenrand hin ist das Schalenteil 3 hochgezogen und teilweise mit Abstellungen 24, 24a und 25 versehen, wobei in der einen Abstellung 25 die Einformung 10 für das Dämpferbein 8 vorgesehen ist.

In den zueinander beabstandeten Bereichen 20, 21 der beiden Schalenteile 2, 3 ist das obere Führungsgelenk 4 und das untere Führungsgelenk 5 gehalten. Die beiden Schalenteile 2, 3 werden über die Befestigungsschrauben 14 bzw. Nieten für den Bremssattel 15 und den Schrauben 26 am Dämpferbein 8 sowie über die Schrauben 6, 7 an den Führungsgelenken 4, 5 und über den Zentralbolzen 11 zusammengespannt.

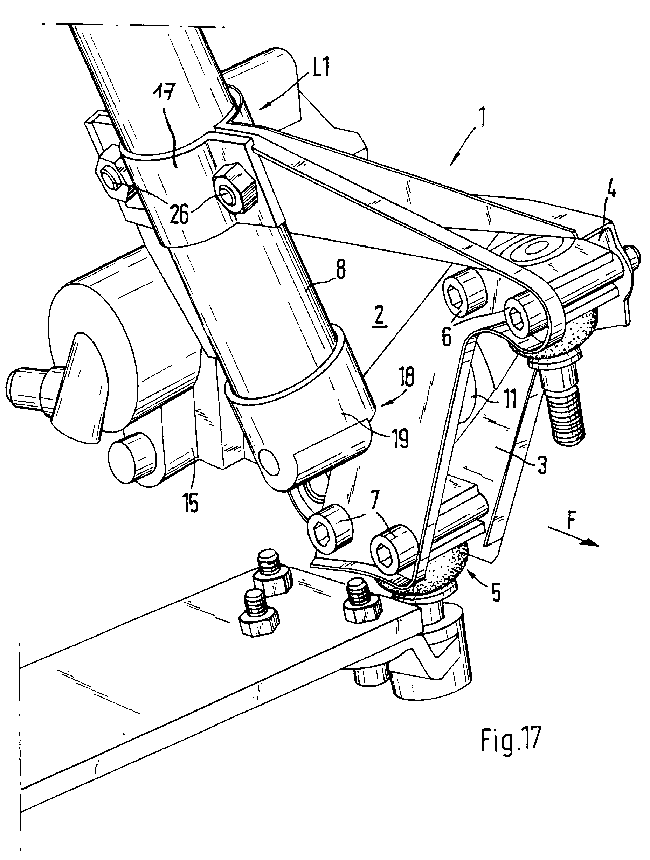

Es ist auch eine Verbindung der beiden Schalenteile 2, 3 über eine Schweißung möglich, welche die Schraubverbindung ergänzt. In den Fig. 17 und 18 ist die Anordnung der beiden Führungsgelenke 4 und 5 näher gezeigt. Die Schweißung kann aus einer Punktschweißung in den aufeinanderliegenden Flächenbereichen der Schalenteile bestehen.

Die Führungsgelenke 4, 5 umfassen jeweils ein Aufnahmeelement 29, welches an gegenüberliegenden Seitenkanten Nuten 27, 28 aufweist. In diesen sind die Befestigungsbolzen 6, 7 gehalten, die das Aufnahmeelement 29 zwischen sich halten. Das Aufnahmelement 29 ist vorzugsweise als Strangpreßprofil ausgeführt.

Das Dämpferbein 8 ist am freien Ende 18 mit dem Lagerelement 19 verbunden, das als abschließende Kappe 30 ausgeführt ist. Diese Kappe 30 weist eine vertiefte Abstützfläche 31 sowie eine Durchgangsbohrung 32, beispielsweise mit Gewinde, für den Zentralbolzen 11 auf. Die Kappe 30 schließt den Zylinderraum des Dämpferbeines 8 dichtend ab. Die Durchgangsbohrung 32 kann je nach Neigung des Dämpferbeines 8 unter einem Winkel zur Durchgangsbohrung 32 stehen.

## Patentansprüche

1. Schwenklagereinheit für ein Fahrzeugrad mit einem Träger, mit folgenden Merkmalen:
- der Träger umfaßt zwei Schalenteile (2, 3), die
- profiliert ausgeformt sind,
- flächig aufeinander abstützende Teilbereiche (12a, 13a, 12, 13) sowie sich daran anschließende, beabstandet ausgeformte Schalenbereiche (20, 21) aufweisen,
- integrierte Lagerungen (L1, L2) für ein Dämpferbein (8) oder ein Führungsgelenk und einen Bremssattel (15) aufweisen und
- mit einem Zentralbolzen (11) zur Aufnahme eines Lagers (L3) für eine Bremsscheibe und ein Rad verbunden sind, wobei ferner
- zwischen den Schalenteilen (2, 3) einzeln einsetzbare Führungsgelenke (4, 5) angeordnet sind.

2. Schwenklagereinheit nach Anspruch 1, dadurch gekennzeichnet, daß zur Lagerung (L1, L2) des Dämpferbeines (8) sowie des Bremssattels (15) die Schalenteile (2, 3) in einem horizontalen Abschnitt (12, 12a) sowie in einem vertikalen Abschnitt (13, 13a) flächig aufeinander liegen.

3. Schwenklagereinheit nach einem oder mehreren der vorhergehenden Ansprüche, dadurch gekennzeichnet, daß das außenliegende Schalenteil (3) eine topfförmige Einprägung (23) um eine Aufnahmebohrung (22) für den Zentralbolzen (11) aufweist und zum Außenrand hin hochgezogen ist und teilweise Abstellungen (24, 24a, 25) aufweist, wobei die eine Abstellung (25) eine halbkreisförmige Einformung (10) zur Aufnahme eines Abschnitts des Dämpferbeines (8) besitzt.

4. Schwenklagereinheit nach einem oder mehreren der vorhergehenden Ansprüche, dadurch gekennzeichnet, daß in den beabstandet ausgeformten Schalenbereichen (20, 21) der beiden Schalenteile (2, 3) zwei einzeln einsetzbare Führungsgelenke (4, 5) angeordnet sind und eine Verbindung der Schalenteile (2, 3) über Schraubbolzen (6, 7) herstellen.

5. Schwenklagereinheit nach einem oder mehreren der vorhergehenden Ansprüche, dadurch gekennzeichnet, daß das innenliegende Schalenteil (2) eine mit der Einformung (10) für das Dämpferbein (8) im außenliegenden Schalenteil (3) korrespondierende gleiche Einformung (9) aufweist.

6. Schwenklagereinheit nach einem oder mehreren der vorhergehenden Ansprüche, dadurch gekennzeichnet, daß das innenliegende Schalenteil (2) im Bereich von Aufnahmebohrungen (14a) für den Bremssattel (15) einen etwa U-förmigen Querschnitt aufweist.

7. Schwenklagereinheit nach einem oder mehreren der vorhergehenden Ansprüche, dadurch gekennzeichnet, daß die Schalenteile (2, 3) in einem Bereich, der sich an die korrespondierenden Einformungen (9, 10) anschließt und bis zu dem oberen einzeln einsetzbaren Führungsgelenk (5) erstreckt, im Querschnitt etwa Z-förmig ausgeführt sind.

8. Schwenklagereinheit nach eine, oder mehreren der vorhergehenden Ansprüche, dadurch gekennzeichnet, daß die einzeln einsetzbaren Führungsgelenke (4, 5) unter- und oberhalb des Zentralbolzens (11) zwischen den Schalenteilen (2, 3) gehalten sind, wobei das obere einzeln einsetzbare Führungsgelenk (4) - in bezug auf die Fahrtrichtung F - vor dem unteren einzeln einsetzbaren Führungsgelenk (5) angeordnet ist.

9. Schwenklagereinheit nach einem oder mehreren der vorhergehenden Ansprüche, dadurch gekennzeichnet, daß die einzeln einsetzbaren Führungsgelenke (4, 5) jeweils ein Aufnahmeelement (29) für eine Gelenkkugel aufweisen, das in gegenüberliegenden Seitenkanten Nuten (27, 28) besitzt, in den Befestigungsschrauben (6, 7) zur Festlegung zwischen den Schalenteilen (2, 3) angeordnet sind.

10. Schwenklagereinheit nach einem oder mehreren der vorhergehenden Ansprüche, dadurch gekennzeichnet, daß das Dämpferbein (8) am unteren freien Ende (18) mit einem abschließenden Lagerelement (19) verbunden ist, das eine Aufnahmebohrung (32) für den Zentralbolzen (11) aufweist.

11. Schwenklagereinheit nach einem oder mehreren der vorhergehenden Ansprüche, dadurch gekennzeichnet, daß das Lagerelement (19) eine Abschlußkappe (30) für das Dämpferbein (8) bildet, die eine vertiefte Abstützfläche (31) besitzt, welche unter einem Winkel zur Längsachse der Aufnahmebohrung (32) angeordnet ist.

## Claims

1. A pivot-bearing unit for a vehicle wheel with a support, with the following features:
- the support comprises two shell parts (2, 3) which
- are profiled,
- have partial areas (12a, 13a, 12, 13) supported on one another in a planar manner and spaced shell areas (20, 21) adjoining the said partial areas (12a, 13a, 12, 13),
- have integrated mountings (**L1, L2**) for a shock-absorbing leg (8) or a guiding joint and a brake calliper (15) and
- are connected to a central pin (11) for receiving a bearing (**L3**) for a brake disc and a wheel,
- wherein individually insertable guiding joints (4, 5) are additionally arranged between the shell parts (2, 3).

2. A pivot-bearing unit according to Claim 1, **characterized in that** for the mounting (**L1, L2**) of the shock-absorbing leg (8) and the brake calliper (15) the shell parts (2, 3) rest in a planar manner one upon the other in a horizontal portion (12, 12a) and in a vertical portion (13, 13a).

3. A pivot-bearing unit according to one or more of the preceding Claims, **characterized i**n **that** the outside shell part (3) has a cup-shaped impressed portion (23) around a receiving bore (22) for the central pin (11) and is raised towards the outer edge and is provided in part with projections (24, 24a, 25), wherein one projection (25) has a semicircular recessed portion (10) for receiving a portion of the shock-absorbing leg (8).

4. A pivot-bearing unit according to one or more of the preceding Claims, **characterized in that** two individually insertable guiding joints (4, 5) are arranged in the spaced shell areas (20, 21) of the two shell parts (2, 3) and form a connexion of the shell parts (2, 3) by way of screw bolts (6, 7).

5. A pivot-bearing unit according to one or more of the preceding Claims, **characterized in that** the inside shell part (2) has an equal recessed portion (8) corresponding to the recessed portion (10) for the shock-absorbing leg (8) in the outside shell part (3).

6. A pivot-bearing unit according to one or more of the preceding Claims, **characterized in that** the inside shell part (2) has a substantially U-shaped cross-section in the region of receiving bores (14a) for the brake calliper (15).

7. A pivot-bearing unit according to one or more of the preceding Claims, **characterized in that** the shell parts (2,3) are substantially Z-shaped in cross-section in a region adjoining the corresponding recessed portions (9, 10) and extending as far as the upper individually insertable guiding joint (5).

8. A pivot-bearing unit according to one or more of the preceding Claims, **characterized in that** the individually insertable guiding joints (4, 5) are held above and below the central pin (11) between the shell parts (2, 3), wherein the upper individually insertable guiding joint (4) [*sic - recte* (5)]¹ is arranged in front of the lower individually insertable guiding joint (5) [*sic - recte* (4)] with respect to the direction of travel **F**.

9. A pivot-bearing unit according to one or more of the preceding Claims, **characterized in that** the individually insertable guiding joints (4, 5) are each provided with a respective receiving member (29) for an articulation ball provided on opposite lateral edges with grooves (27, 28) in which fastening bolts (6, 7) for fastening between the shell parts (2, 3) are arranged.

10. A pivot-bearing unit according to one or more of the preceding Claims, **characterized in that** the shock-absorbing leg (8) is connected at the lower free end (18) to an adjoining bearing member (19) provided with a receiving bore (32) for the central pin (11).

11. A pivot-bearing unit according to one or more of the preceding Claims, **characterized in that** the bearing member (19) has a closure cap (30) for the shock-absorbing leg (8), the said closure cap (30) having a depressed support face (31) arranged at an angle to the longitudinal axis of the receiving bore (32).

## Revendications

1. Ensemble de paliers de pivotement pour une roue de véhicule avec un support, présentant les caractéristiques suivantes:
- le support comprend deux parties de coque (2, 3) qui
- sont profilées,
- présentent des zones partielles (12a, 13a, 12, 13) s'appuyant à plat les unes sur les autres ainsi que des zones de coque (20, 21) s'y raccordant, formées espacées,
- présentent des suspensions intégrées (L1, L2) pour une jambe d'amortisseur (8) ou une articulation de guidage ainsi qu'un étrier de frein (15) et
- sont reliées à un axe central (11) destiné à recevoir un palier (L3) pour un disque de frein et une roue, en outre
- des articulations de guidage (4, 5) étant disposées de manière à pouvoir être insérées individuellement entre les parties de coque (2, 3).

2. Ensemble de paliers de pivotement selon la revendication 1, caractérisé en ce que pour la suspension (L1, L2) de la jambe d'amortisseur (8) ainsi que de l'étrier de frein (15), les parties de coque (2, 3) reposent à plat l'une sur l'autre dans une section horizontale (12, 12a) ainsi que dans une section verticale (13, 13a).

3. Ensemble de paliers de pivotement selon une ou plusieurs des revendications précédentes, caractérisé en ce que la partie de coque (3) située à l'extérieur présente une empreinte (23) en forme de pot autour d'un perçage formant logement (22) pour l'axe central (11) et est relevée vers le bord extérieur, et présente en partie des gradins (24, 24a, 25), un gradin (25) présentant un creux (10) en forme de demi-cercle, destiné à recevoir une section de la jambe d'amortisseur (8).

4. Ensemble de paliers de pivotement selon une ou plusieurs des revendications précédentes, caractérisé en ce que dans les zones de coque (20, 21) bombées et espacées des deux parties de coque (2, 3), sont disposées deux articulations de guidage (4, 5) à insérer individuellement, qui réalisent une liaison des parties de coque (2, 3) par des boulons (6, 7).

5. Ensemble de paliers de pivotement selon une ou plusieurs des revendications précédentes, caractérisé en ce que la partie de coque (2) située à l'intérieur présente un même creux (9) correspondant au creux (10) pour la jambe d'amortisseur (8) dans la partie de coque (3) située à l'extérieur.

6. Ensemble de paliers de pivotement selon une ou plusieurs des revendications précédentes, caractérisé en ce que la partie de coque (2) située à l'intérieur présente une section transversale à peu près en U dans la zone de perçages formant logements (14a) pour l'étrier de frein (15).

7. Ensemble de paliers de pivotement selon une ou plusieurs des revendications précédentes, caractérisé en ce que les parties de coque (2, 3) présentent une section transversale à peu près en Z dans une zone qui fait suite aux creux (9, 10) correspondants et qui s'étend jusqu'à l'articulation de guidage supérieure (5) inserrable individuellement.

8. Ensemble de paliers de pivotement selon une ou plusieurs des revendications précédentes, caractérisé en ce que les articulations de guidage (4, 5) à insérer individuellement sont maintenues au-dessous et au-dessus de l'axe central (11), entre les parties de coque (2, 3) l'articulation de guidage (4) à insérer individuellement étant disposée - par rapport au sens de marche F - devant l'articulation de guidage (5) à insérer individuellement.

9. Ensemble de paliers de pivotement selon une ou plusieurs des revendications précédentes, caractérisé en ce que les articulations de guidage (4, 5) à insérer individuellement présentent chacune un élément formant logement (29) pour une sphère d'articulation, qui présente des rainures dans des bords latéraux opposés, dans lesquelles sont disposées des vis de fixation (6, 7) pour la fixation entre les parties de coque (2, 3).

10. Ensemble de paliers de pivotement selon une ou plusieurs des revendications précédentes, caractérisé en ce que la jambe d'amortisseur (8) est reliée à l'extrémité libre inférieure (18) à un élément de palier (19) de fermeture, qui présente un perçage formant logement (32) pour l'axe central (11).

11. Ensemble de paliers de pivotement selon une ou plusieurs des revendications précédentes, caractérisé en ce que l'élément de palier (19) forme un capuchon de fermeture (30) pour la jambe d'amortisseur (8) qui présente une surface d'appui (31) enfoncée, qui est disposée sous un angle par rapport à l'axe longitudinal du perçage formant logement (32).
